# EUROPÄISCHE PATENTSCHRIFT

(11) **EP 0 351 539 B1**
(45) Veröffentlichungstag und Bekanntmachung des Hinweises auf die Patenterteilung: **12.05.1993**
(21) Anmeldenummer: 89110365.7
(22) Anmeldetag: 08.06.1989
(51) Int. Cl.: A23C 19/05, A23C 21/00, A23C 9/15

(54) **Verfahren zur Herstellung von Labkäse aus Rohmilch**
Process for preparing rennet cheese from raw milk
Procédé de préparation de fromage de présure à partir de lait cru

(30) Priorität: 16.07.1988 DE 3824167
(43) Veröffentlichungstag der Anmeldung: 24.01.1990
(73) Patentinhaber: Westfalia Separator AG, 59302 Oelde (DE)
(72) Erfinder: Lehmann, Hanno, D-4740 Oelde 1 (DE); Wasen, Iloi, D-4740 Oelde 1 (DE); Pointurier, Hubert, Paris (FR)
(74) Vertreter: Stracke, Alexander, Dipl.-Ing.

(56) Entgegenhaltungen:
- GB-A- 1 446 220
- US-A- 3 956 520
- US-A- 4 036 999
- FOOD SCIENCE & TECHNOLOGY ABSTRACTS, Nr. 80-01-P0070 (80003753); & SU-A-626 751 (V.A. MAR'IN et al.)
- FOOD SCIENCE & TECHNOLOGY ABSTRACTS, Nr. 74-11-P1627; G. BENGTSSON: "Reducing pollution of dairy effluents", & DAIRY INDUSTRIES, Band 38, Nr. 5, Seiten 217-218,222, 1973
- JOURNAL OF DAIRY SCIENCE, Band 60, 1977, Seiten 1820-1823; S. CROSS: "Losses and recovery of curd fines in cottage cheese manufacture"

## Beschreibung

Die Erfindung bezieht sich auf ein Verfahren zur Herstellung von Labkäse aus Rohmilch, bei dem die Rohmilch von internem und externem Schmutz gereinigt sein kann, standardisiert wurde und zu den Käsefertigern gefördert wird, in denen eine biologische Reaktion nach Zugabe von einem Fällungsmittel und Kulturen durch eine Trennung der Käsemasse von der Käsestaub enthaltenden Molke abgeschlossen wird.

Aus der Molke kann durch Separierung oder Dekantation denaturierter Käsestaub (Kaseinstaub) abgetrennt werden.

Die Rohmolke wird in einen Klärseparator an einer Stelle hoher Zentrifugalkraft in das Tellerpaket eingeleitet. Der Käsestaub wird aussepariert und sammelt sich im doppelt konischen Feststoffraum des Klärseparators. Durch auf die Menge des angefallenen Käsestaubes abgestimmte Total- bzw. Teilentleerungen wird der Käsestaub in einer verwertbaren, aufkonzentrierten Form ausgetragen.

Bei den bisher bekannten Verfahren zur Herstellung von Labkäse aus Rohmilch ist der Käsestaub ein echtes Abfallprodukt, da die geklärte Molke für die Weiterverarbeitung bestimmt ist.

In einigen Fällen wird der Käsestaub für Schmelzkäse weiterverarbeitet oder an Schmelzkäsereien verkauft. Bietet sich eine solche Möglichkeit nicht an, dann wird der Käsestaub in den meisten Fällen für Fütterungszwecke abgegeben.

Für eine wirtschaftliche Weiterverarbeitung für den genannten konventionellen Verwendungszweck werden größere Mengen an Käsestaub benötigt. Bis eine ausreichende Menge erreicht ist, entstehen hohe Kosten durch Kühlung, Zwischenlagerung und Verpackung. Bei der Zwischenlagerung wird die Qualität des Käsestaubes negativ beeinträchtigt.

Beim Wiederverkauf erzielt der Erzeuger häufig keinen guten Preis, da er von Markttrends abhängig ist.

Bei der Herstellung von Labkäse fällt ein Käsestaub an, in dem ein so hoher Kalziumanteil enthalten ist, daß eine Rückverflüssigung ohne die Zugabe von Schmelzsalzen nicht möglich ist. Das Kalzium (Ca⁺⁺) führt zu Brückenbildungen zwischen den Kaseinmicelen und behindert dadurch die Rückverflüssigung. Durch die Schmelzsalze werden die Ca⁺⁺-Bestandteile zwar derart gebunden, daß die Rückverflüssigung ermöglicht wird, aber da die Schmelzsalze im Produkt bleiben, kann der Kaseinstaub auch nur für die Schmelzkäsezubereitung benutzt werden.

Der Erfindung liegt die Aufgabe zugrunde, das Verfahren der eingangs genannten Art so zu gestalten, daß der aus der Molke anfallende Käsestaub nicht als Abfallprodukt abgetrennt, sondern in den Herstellungsprozeß zurückgeführt, der Milch zugemischt oder anderen Milchprodukten zwecks Eiweißanreicherung oder Trockenmassenerhöhung zudosiert werden kann.

Diese Aufgabe wird erfindungsgemäß durch die Verfahrensschritte nach den kennzeichnenden Teilen der nebengeordneten Patentansprüche gelöst.

Der rückverflüssigte Käsestaub ist klärfähig, so daß alle Verunreinigungen abgetrennt werden können.

Mit dem erfindungsgemäßen Verfahren ist es möglich, die Ca⁺⁺-Bestandteile ohne die Zugabe von Schmelzsalzen zu entfernen. Durch den Schritt a) geht der größte Teil des Kalziums in Lösung. Dieses Kalzium wird dann durch Schritt b) mit der abgetrennten Flüssigkeit entfernt. Der so vom Kalzium befreite Käsestaub wird durch Schritt c) mit einer kalziumarmen Lösung vermischt. Am vorteilhaftesten ist hierfür Wasser, da der Kalziumgehalt von Milch oder Molke schon störend wirken kann.

Durch die Rückverflüssigung des Käsestaubes in Wasser oder Molke wird im Endprodukt eine Trockenmasse von ca. 15 Prozent erreicht. Das Endprodukt hat dadurch eine gute Konsistenzeigenschaft für die Weiterverarbeitung bzw. Klärung und Vermischung mit anderen Produkten. Sofern anstelle von Wasser Molke verwendet wird, nutzt man in der Molke vorhandene Komponenten aus, die zwischen dem Käsestaub und der flüssigen Phase Bindungen ermöglichen, durch die die Stabilität des rückverflüssigten Käsestaubs in Lösung verbessert wird.

Die Thermisierung erfolgt bei vorzugsweise 50°C über einen Zeitraum von fünf bis zehn Minuten. Diese Thermisierung wird durchgeführt, um eine gute thermische Aktivität und eine ausreichende Reaktionszeit zu gewährleisten.

Bei dem Verfahren wird eine pH-Werteinstellung auf vorzugsweise 6,8 mit einem zehnprozentigen Neutralisationsmittel vorgenommen.

Das Produkt hat dadurch einen End-pH-Wert, der dem pH-Wert von frischen Milchprodukten ähnlich ist, so daß das Produkt für jede Weiterverarbeitung geeignet ist.

Ein zehnprozentiges Neutralisationsmittel wird verwendet, damit bei der Neutralisation keine Verbrennungserscheinungen entstehen.

Es erfolgt anschließend eine Erhitzung auf 80 bis 90°C für einen Zeitraum von einer bis fünf Minuten.

Bei dieser Temperatur wird in Verbindung mit einem idealen pH-Wert eine gute Auflösung des Käsestaubs erreicht. Ferner wird eine gute bakteriologische Qualität erzielt, ohne daß das Kasein chemisch-physikalisch angegriffen wird.

Die Erhitzung kann in Extrudern, in Schabererhitzern oder doppelwandigen Behältern mit Rührwerk erfolgen. Beim Extruder besteht die Möglichkeit, die Erhitzung unter Hochdruck durchzuführen. Eine Reaktionszeit ist nur bedingt gegeben.
Beim Schabererhitzer besteht die Möglichkeit, das Produkt in Verbindung mit einer Reaktionszeit zu erhitzen.

Bei dem Verfahren kann ferner ein phosphathaltiges Salz, z.B. 0,1 bis 1,0 g Na₂HPO₄, zugesetzt werden.

Die verschiedenen Positionen des Verfahrens zur Herstellung von Labkäse aus Rohmilch mit einer Ausbeutesteigerung im Käsereiprozeß durch Rückverflüssigung des anfallenden Käsestaubes sind in dem folgenden Schaubild aufgezeigt. Die Rückverflüssigung des Käsestaubes in eine gelöste Form ist in der Position 12 dargestellt. Die Position 13 enthält die gewonnene Suspension mit in Lösung befindlichem Kasein. Diese Suspension wird bei einem Vorhandensein der Position 2 vor dem Reinigungsseparator der Käsereimilch zugegeben oder sonst vor der Position 3. Im letzteren Fall erfolgt vor der Zumischung zur Käsereimilch ein zentrifugales Klären der Suspension in der Position 14. (Schaubild s.S. 5).

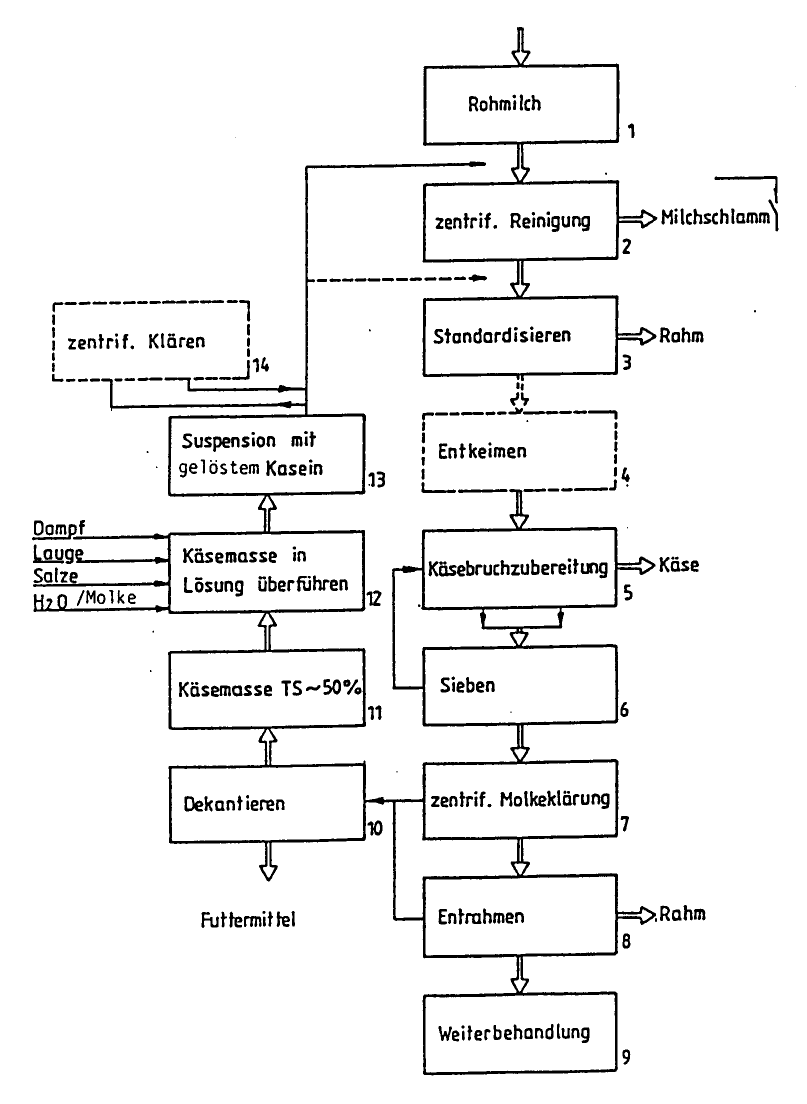

## Patentansprüche

1. Verfahren zur Herstellung von Labkäse aus Rohmilch, bei dem die Rohmilch von internem und externem Schmutz gereinigt sein kann, standardisiert wurde und zu den Käsefertigern gefördert wird, in denen eine biologische Reaktion nach Zugabe von einem Fällungsmittel und Kulturen durch eine Trennung der Käsemasse von der Molke abgeschlossen wird, worauf aus der Molke durch Separierung oder Dekantation denaturierter Käsestaub (Kaseinstaub) abgetrennt wird, **gekennzeichnet durch**
a) biologisches Ansäuern (mit Milchsäure oder Kulturen) des Käsestaubes in Molke oder Wasser,
b) Abtrennen der denaturierten Eiweiße aus der Molke durch Separierung oder Dekantation, wobei der überwiegende Anteil des störenden Kalziums mit der abgetrennten Flüssigkeit entfernt wird,
c) Suspendieren des Käsestaubes in Wasser oder Molke, vorzugsweise Wasser,
d) Thermisierung bei 40 bis 60°C, vorzugsweise 50°C über einen Zeitraum von fünf bis zehn Minuten,
e) pH-Werteinstellung auf 6,5 bis 7,0, vorzugsweise 6,8 mit einem zehnprozentigen Neutralisationsmittel,
f) Erhitzung auf 80 bis 90°C für einen Zeitraum von einer bis fünf Minuten,
g) Rückführung in die Rohmilch oder Zudosierung zu anderen Milchprodukten zwecks Eiweißanreicherung oder Trockenmassenerhöhung.

2. Verfahren zur Herstellung von Labkäse aus Rohmilch, bei dem die Rohmilch von internem und externem Schmutz gereinigt sein kann, standardisiert wurde und zu den Käsefertigern gefördert wird, in denen eine biologische Reaktion nach Zugabe von einem Fällungsmittel und Kulturen durch eine Trennung der Käsemasse von der Käsestaub enthaltenden Molke abgeschlossen wird, **gekennzeichnet durch**
a) biologisches Ansäuern (mit Milchsäure oder Kulturen) des in der Molke enthaltenen Käsestaubs,
b) Abtrennen der denaturierten Eiweiße aus der Molke durch Separierung oder Dekantation, wobei der überwiegende Anteil des störenden Kalziums mit der abgetrennten Flüssigkeit entfernt wird,
c) Suspendieren des Käsestaubs in Wasser oder Molke, vorzugsweise Wasser,
d) Thermisierung bei 40 bis 60°C, vorzugsweise 50°C über einen Zeitraum von fünf bis zehn Minuten,
e) pH-Werteinstellung auf 6,5 bis 7,0, vorzugsweise 6,8 mit einem zehnprozentigen Neutralisationsmittel,
f) Erhitzung auf 80 bis 90°C für einen Zeitraum von einer bis fünf Minuten,
g) Rückführung in die Rohmilch oder Zudosierung zu anderen Milchprodukten zwecks Eiweißanreicherung oder Trockenmassenerhöhung.

3. Verfahren nach Anspruch 1 oder 2, dadurch gekennzeichnet, daß der rückverflüssigte Käsestaub vor der Vermischung mit einem Medium, z.B. Milch oder Milchprodukten, in einem Klärseparator geklärt wird.

4. Verfahren nach Anspruch 1 oder 2, dadurch gekennzeichnet, daß die Erhitzung in Extrudern oder Schabererhitzern oder doppelwandigen Behältern mit Rührwerk durchgeführt wird.

5. Verfahren nach Anspruch 1 oder 2, gekennzeichnet durch den Zusatz von phosphathaltigem Salz.

6. Verfahren nach Anspruch 5, dadurch gekennzeichnet, daß 0,1 bis 1,0 g Na₂HPO₄ zugesetzt werden.

## Claims

1. A process for the production of rennet cheese from ordinary milk, in which the ordinary milk can be cleaned of internal and external dirt, it was standardised and it is transported to the cheese producers at which a biological reaction is concluded after the addition of a precipitant and cultures by separation of the cheese mass from the whey, whereupon denatured cheese powder (casein powder) is removed from the whey by separation or decantation, characterised by:
a) biological acidification (with lactic acid or cultures) of the cheese powder in whey or water,
b) removal of the denatured albumins from the whey by separation or decantation, wherein the predominant port of the troublesome calcium is removed with the liquid which is separated off,
c) suspension of the cheese powder in water or whey, preferably water,
d) heat treatment at 40 to 60°C, preferably 50°C, over a period of time of from five to ten minutes,
e) pH-value adjustment to 6.5 to 7.0, preferably 6.8, with a ten percent neutralisation agent,
f) heating to 80 to 90°C for a period of time of from one to five minutes, and
g) return to the ordinary mid or controlled addition to other milk products for the purposes of albumin enrichment or an increase in dry mass.

2. A process for the production of rennet cheese from ordinary milk, in which the ordinary milk can be cleaned of internal and eternal dirt, it was standardised and it is transported to the cheese producers at which a biological reaction is concluded after the addition of a precipitant and cultures by separation of the cheese mass from the whey containing cheese powder, characterised by:
a) biological acidification (with lactic acid or cultures) of the cheese powder contained in the whey,
b) removal of the denatured albumins from the whey by separation or decantation, wherein the predominant part of the troublesome calcium is removed with the liquid which is separated off,
c) suspension of the cheese powder in water or whey, preferably water,
d) heat treatment at 40 to 60°C, preferably 50°C, over a period of time of from five to ten minutes.
e) pH-value adjustment to 6.5 to 7.0, preferably 6.8 with a ten percent neutralisation agent,
f) heating to 80 to 90°C for a period of time of from one to five minutes, and
g) return to the ordinary milk or controlled addition to other milk products for the purposes of albumin enrichment or an increase in dry mass.

3. A process according to claim 1 or claim 2 characterised in that the re-liquefied cheese powder is clarified in a clarifying separator prior to mixing with a medium, for sample milk or milk products.

4. A process according to claim 1 or claim 2 characterised in that the heating operation is carried out in extruders or scraper heaters or double-wall containers with stirring mechanism.

5. A process according to claim 1 or claim 2 characterised by the addition of phosphate-bearing salt.

6. A process according to claim 5 characterised in that from 0.1 to 1.0 g of Na₂HPO₄ is added.

## Revendications

1. Procédé de préparation de fromage de présure à partir de lait cru, dans lequel le lait cru peut être purifié de souillure interne et externe, a été standardisé et transporté vers des appareils finisseurs de fromage, dans lesquels une réaction biologique est achevée après addition d'un agent de précipitation et de cultures par suite d'une séparation de la pâte de fromage du petit lait, après quoi la poudre de fromage (poudre de caséine) dénaturée est séparée du petit lait par séparation ou décantation, procédé caractérisé par :
a) l'acidification biologique (avec acide lactique et cultures) de la poudre de fromage dans du petit lait ou de l'eau,
b) la séparation de l'albumine dénaturée du petit lait par séparation ou décantation, la partie principale du calcium perturbateur étant éliminée avec le liquide séparé,
c) la mise en suspension de la poudre de fromage dans de l'eau ou du petit lait, de préférence dans de l'eau,
d) la mise en température de 40 à 60°C, de préférence 50°C pendant une période de 5 à 10 minutes,
e) l'ajustage du pH de 6,5 à 7,0, de préférence 6,8 avec un agent de neutralisation à 10 pour-cent,
f) le réchauffage à 80 jusqu'à 90°C pendant une période de une à cinq minutes,
g) le recyclage dans le lait cru ou addition dosée à d'autres produits laitiers en vue d'enrichissement en albumine ou d'augmentation de la masse sèche.

2. Procédé pour préparer du fromage de présure à partir de lait cru, dans lequel le lait cru peut être purifié de souillure interne et externe, a été standardisé et est transporté à des appareils finisseurs de fromage, dans lesquels une réaction biologique est achevée après addition d'un agent de précipitation et de cultures grâce à une séparation de la pâte de fromage du petit lait contenant de la poudre de caséine, procédé caractérisé par :
a) l'acidification biologique (avec acide lactique et cultures) de la poudre de fromage dans du petit lait ou de l'eau,
b) la séparation de l'albumine dénaturée du petit lait par séparation ou décantation, la partie principale du calcium perturbateur étant éliminée avec le liquide séparé,
c) la mise en suspension de la poudre de fromage dans de l'eau ou du petit lait, de préférence dans de l'eau,
d) la mise en température de 40 à 60°C, de préférence 50°C pendant une période de 5 à 10 minutes,
e) l'ajustage du pH de 6,5 à 7,0, de préférence 6,8 avec un agent de neutralisation à 10 pour-cent,
f) le réchauffage à 80 jusqu'à 90°C pendant une période de une à cinq minutes,
g) le recyclage dans le lait cru ou addition dosée à d'autres produits laitiers en vue d'enrichissement en albumine ou d'augmentation de la masse sèche.

3. Procédé selon les revendications 1 ou 2, caractérisé en ce que la poudre de fromage reliquéfiée est décantée dans un séparateur par décantation avant le mélange avec un milieu, par exemple du lait ou des produits laitiers.

4. Procédé selon les revendications 1 ou 2, caractérisé en ce que le réchauffage dans des extrudeuses ou des réchauffeurs à racloir ou des récipients à double paroi est exécuté avec agitateur.

5. Procédé selon les revendications 1 ou 2, caractérisé par l'addition de sel contenant du phosphate.

6. Procédé selon les revendications 1 ou 2, caractérisé en ce qu on ajoute 0,1 à 1,0 g de Na₂ HPO₄.
